# FASCICULE DE BREVET EUROPEEN

(11) **EP 2 019 446 B1**
(45) Date de publication et mention de la délivrance du brevet: **18.08.2010**
(21) Numéro de dépôt: 08159713.0
(22) Date de dépôt: 04.07.2008
(51) Int. Cl.: H01M 10/50, H01M 2/10, H01M 6/50, B60L 11/00, H01G 9/00

(54) **Dispositif compact d'alimentation électrique comportant des moyens de refroidissement**
Kompakte Vorrichtung zur Stromversorgung, die Kühlmittel umfasst
Compact power supply device comprising cooling means

(30) Priorité: 16.07.2007 FR 0756514
(43) Date de publication de la demande: 28.01.2009
(73) Titulaire: Valeo Equipements Electriques Moteur, 94046 Créteil Cedex (FR)
(72) Inventeur: Abadia, Roger VALEO EQUIPEMENTS ELECTRIQUES MOTEUR, 93360, NEUILLY-PLAISANCE (FR); Guerin, Fabien VALEO EQUIPEMENTS ELECTRIQUES MOTEUR, 92320, CHATILLON (FR); Rondier, Patrick VALEO EQUIPEMENTS ELECTRIQUES MOTEUR, 95360, MONTMAGNY (FR)
(74) Mandataire: Gamonal, Didier

(56) Documents cités:
- EP-A- 0 964 470
- EP-A- 1 548 858
- EP-A- 1 553 655
- DE-A1-102005 047 034
- US-A- 5 015 545

## Description

### DOMAINE TECHNIQUE DE L'INVENTION

1. Dispositif d'alimentation électrique pour un véhicule automobile, qui est destiné à relier au moins une machine électrique à au moins une batterie du véhicule, et qui comporte un boîtier unique dans lequel plusieurs unités de stockage d'énergie électrique sont agencées, et des moyens de refroidissement des unités de stockage par convexion, qui produisent un flux d'air de refroidissement circulant dans le boîtier de manière à balayer successivement au moins deux unités de stockage.

### ETAT DE LA TECHNIQUE

On connaît de nombreux exemples de dispositifs de ce type.

De tels dispositifs d'alimentation électrique sont par exemple utilisés pour l'alimentation de machines électriques de véhicules automobiles de type électrique et/ou hybride, c'est à dire combinant une machine électrique et un moteur thermique conventionnel, pour lesquels il est important de pouvoir récupérer l'énergie cinétique afin de recharger la batterie du véhicule et d'approvisionner au moins un réseau de bord en puissance électrique. Cette fonction est couramment appelée freinage récupératif. Une batterie de type métal hydrure est par exemple utilisée.

Ces dispositifs d'alimentation électrique posent toutefois de nombreux problèmes.

En effet, les unités de stockage d'énergie subissent de nombreux cycles de charge et de décharge. Par exemple, lorsque le véhicule automobile démarre, il se produit une décharge d'électricité très intense. Par exemple encore, les unités de stockage sont chargées avec un courant électrique de forte intensité lors des périodes de freinage récupératif.

Lorsque du courant électrique est libéré, lors des opérations de décharge, ou stocké, lors des opérations de charge, les unités de stockage dégagent de la chaleur. La quantité de chaleur dégagée est proportionnelle à l'intensité du courant électrique qui circule en charge ou en décharge.

De plus, ces cycles de charge et de décharge sont susceptibles de se succéder à un rythme très élevé, notamment lorsque le véhicule roule en ville et que le conducteur est amené à arrêter et à redémarrer fréquemment le véhicule.

Or, pour que les unités de stockage puissent stocker efficacement le courant électrique, elles doivent être maintenues dans une plage de températures de fonctionnement qui est bornée par une température maximale de fonctionnement et par une température minimale de fonctionnement.

Lorsque les cycles de charge et de décharge s'enchaînent rapidement, la température des unités de stockage est susceptible de monter très vite au-delà de la température maximale de fonctionnement. La montée en température des unités de stockage est d'autant plus rapide que les unités de stockage sont agencées dans un bac fermé.

Il est connu d'utiliser des moyens pour le refroidissement des unités de stockage qui envoient un flux d'air sur les unités de stockage, de manière que ce flux d'air prélève une quantité de chaleur depuis les unités de stockage par convection, pour refroidir ces dernières.

L'efficacité du refroidissement des unités de stockage dépend de la quantité de chaleur que le flux d'air est apte à prélever des unités de stockage. Cette quantité de chaleur est notamment déterminée en fonction de la différence entre la température du flux d'air et la température de chaque unité de stockage.

Cependant, la température du flux d'air augmente progressivement lors de sa circulation au travers du boîtier. Ainsi, la différence de températures entre le flux d'air et une unité de stockage est plus importante lorsque l'unité de stockage est située en amont de l'écoulement du flux d'air, que lorsque l'unité de stockage est située en aval de l'écoulement du flux d'air.

Le refroidissement d'une unité de stockage située en aval est donc moins efficace, ce qui peu nuire au fonctionnement de cette unité de stockage.

On a proposé dans le document US 5 015 545 une solution permettant de refroidir de manière plus uniforme les unités de stockage d'énergie. A cet effet le boîtier comporte des moyens pour augmenter progressivement la vitesse du flux d'air lors de sa circulation dans le boîtier d'amont en aval. Pour ce faire le boîtier est configuré au niveau des unités de stockage pour présenter une section de canalisation décroissante d'amont en aval, selon le sens de l'écoulement du flux d'air.

Dans le document EP 1 548 858 le boîtier, dans lequel plusieurs unités de stockage d'énergie sont agencées, est en forme de tube de section rectangulaire et est ouvert à deux de ses extrémités pour présenter une entrée d'air et une sortie d'air alignées. Ce boîtier est configuré pour présenter des canaux de guidage de section décroissante en allant de l'entrée à la sortie d'air pour refroidissement par convexion des unités de stockage d'énergie. Ces canaux sont réalisés au niveau de la face interne de plaques de guidage appartenant à l'une au moins des faces supérieure et inférieure du boîtier de section rectangulaire.

Il est souhaitable d'améliorer encore le refroidissement des unités de stockage.

### RESUME DE L'INVENTION

L'invention a pour but de proposer des moyens de refroidissement des unités de stockage d'énergie permettant d'augmenter encore la quantité de chaleur prélevée par le flux d'air sur les unités de stockage.

Dans ce but, l'invention propose un dispositif d'alimentation tel que décrit précédemment, dans lequel le boîtier comporte, d'amont en aval :
- une portion amont par lequel le flux d'air pénètre dans le boîtier ;
- une portion intermédiaire convergente dans laquelle les unités de stockage sont agencées ;
- une portion avale par laquelle le flux d'air sort du boîtier ;
est caractérisé en ce que la section de l'extrémité amont de la portion intermédiaire convergente est supérieure à la section de la portion amont, en ce que le boîtier comporte un tronçon de raccordement divergent reliant la portion amont à la potion intermédiaire convergente, en ce que la section de l'extrémité aval de la portion intermédiaire convergente est supérieure à la section de la portion avale et en ce que le boîtier comporte un tronçon de raccordement convergent reliant la portion intermédiaire convergente à la portion avale.

Cette solution permet d'obtenir une meilleur répartition du flux d'air dans le volume intérieur du boîtier et un refroidissement encore plus uniforme des unités de stockage d'énergie. Les unités de stockage d'énergie situées en aval dans le sens d'écoulement du flux d'air sont encore mieux refroidies.

Le fonctionnement du dispositif d'alimentation d'énergie est ainsi encore plus fiable et plus efficace. Sa durée de vie est ainsi augmentée.

Selon d'autres caractéristiques non limitatives de l'invention prises isolément ou en combinaison :
- le boîtier forme un conduit de canalisation du flux d'air d'orientation principale longitudinale, dans lequel les unités de stockage sont agencées ;
- les unités de stockage sont agencées dans le boîtier de manière à former plusieurs alignements longitudinaux sensiblement parallèles, qui sont répartis transversalement et/ou longitudinalement dans le boîtier, et le boîtier comporte des moyens pour diviser de flux d'air en plusieurs flux secondaires globalement parallèles, dont chaque flux d'air secondaire circule autour des unités de stockage d'un alignement d'unités de stockage associé ;
- les moyens pour diviser le flux consistent en au moins une ailette agencée dans une portion du boîtier située en amont des unités de stockage, par rapport au sens d'écoulement du flux d'air ;
- le dispositif comporte au moins un ventilateur permettant de produire le flux d'air, qui est agencé dans la portion amont et/ou dans la portion avale du boîtier.

D'autres caractéristiques et avantages de l'invention apparaîtront à la lecture de la description détaillée qui suit pour la compréhension de laquelle on se reportera aux figures annexées.

### DESCRIPTION DETAILLEE DES FIGURES

- la figure 1 est un schéma de principe d'un dispositif d'alimentation électrique selon l'invention,
- la figure 2 est une représentation schématique d'un mode de réalisation du dispositif d'alimentation selon l'invention.

### DESCRIPTION DETAILLEE DE L'INVENTION

Dans la description qui va suivre, des chiffres de référence identiques désignent des pièces identiques ou ayant des fonctions similaires.

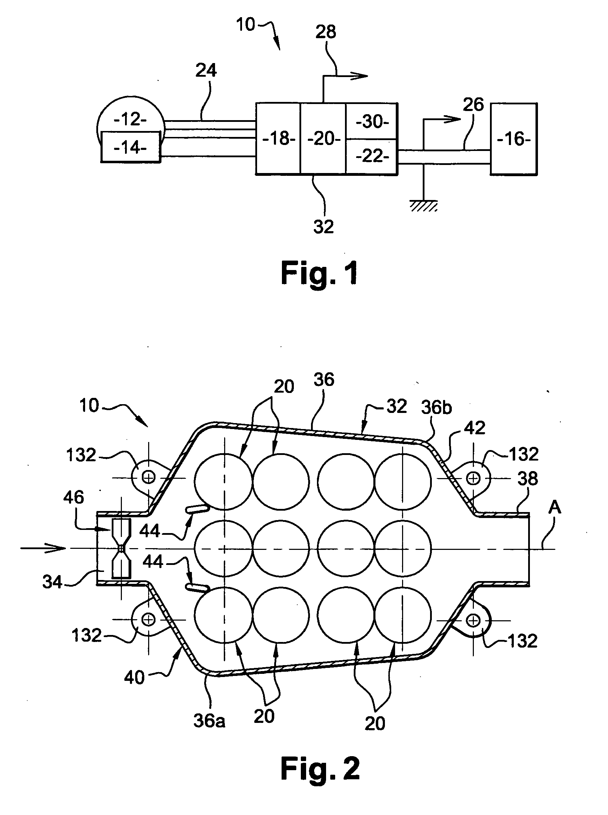

On a représenté à la figure 1 l'ensemble d'un dispositif 10 d'alimentation électrique pour un véhicule automobile réalisé conformément à l'invention.

Le dispositif 10 est destiné à relier au moins une machine électrique tournante 12 à au moins une batterie du véhicule automobile.

Cette machine est munie de capteurs 14 et est susceptible de fonctionner en moteur électrique, par exemple pour démarrer le moteur thermique du véhicule, voire entraîner au moins une roue du véhicule et/ou en générateur électrique, par exemple pour récupérer l'énergie cinétique du véhicule lors d'un freinage, à une batterie 16 du véhicule. Cette machine, appelée alterno-démarreur, est réversible. Cette machine est prise comme exemple non limitatif pour la suite de la description.

Pour mémoire on rappellera qu'un alterno-démarreur est un alternateur réversible permettant, d'une part, de transformer de l'énergie mécanique en énergie électrique lorsqu'il fonctionne en mode générateur électrique pour notamment recharger une batterie et /ou alimenter les consommateurs d'au moins un réseau de bord du véhicule automobile et d'autre part, de transformer de l'énergie électrique en énergie mécanique lorsqu'il fonctionne en mode moteur électrique, dit mode démarreur, pour notamment démarrer le moteur à combustion interne ou moteur thermique du véhicule automobile et, dans un mode de réalisation, éviter que le moteur thermique cale.

Cet alterno-démarreur comporte des moyens de redressement de courant appelés onduleur comportant par exemple des transistors du type MOSFET pilotés par une unité électronique de commande et de contrôle comme décrit par exemple dans les documents FR A 2 745 444 et FR A 2 745 445.

Cette unité électronique de commande et de contrôle reçoit des signaux provenant de capteurs 14 de la position angulaire du rotor de la machine et comporte également des pilotes, dits drivers, qui sont des éléments de puissance et qui commandent les transistors du type MOSFET. Ces pilotes, dans un mode de réalisation, appartiennent à un étage de puissance comprenant également les transistors du type MOSFET de l'onduleur constituant un convertisseur électrique réversible de courant alternatif-continu dit « AC/DC » en mode générateur électrique. En mode moteur électrique, les transistors MOSFET de l'onduleur sont pilotés en tout ou rien pour commander en pleine onde les enroulements du stator de la machine ou en variante par une commande à largeurs d'impulsions variables, c'est à dire une technologie de découpage appelé MLI (modulation par largeur d'impulsion) ou PWM en anglais.

Les éléments de contrôle appartiennent à un étage de contrôle de plus faible puissance.

Dans un mode de réalisation, l'étage de puissance comprend une carte électronique de puissance portant les éléments de puissance, tels que les transistors du type MOSFET et les drivers, et l'étage de contrôle comprend une carte électronique de commande portant les éléments de contrôle.

Dans ces documents précités l'alterno-démarreur est polyphasé.

Dans un mode de réalisation décrit dans les documents WO 02/080334 et WO 03/088471, l'alterno-démarreur appartient à un agencement pour véhicule automobile comportant au moins deux unités de stockage d'énergie électrique. L'une de ces unités de stockage est une batterie et l'autre un super condensateur c'est-à-dire une capacité de grande valeur appelée Ultra capacité.

Dans le document WO 02/080334 le dispositif d'alimentation électrique est destiné à relier la machine électrique tournante à deux batteries appartenant à des réseaux de bord de tension différente.

Ici l'Ultra capacité comporte plusieurs unités élémentaires de stockage d'énergie, comme décrit ci-après. On notera qu'en mode démarreur (fonctionnement en mode moteur électrique), l'agencement permet d'alimenter l'alterno-démarreur avec une tension supérieure à celle en mode générateur.

Ce type d'agencement permet de récupérer de l'énergie lors du freinage et comporte deux réseaux électriques de distribution, au moins un commutateur ou un circuit à deux interrupteurs et un convertisseur continu-continu, dit convertisseur DC/DC, permettant de convertir des tensions et de fonctionner à deux tensions différentes.

Pour plus de précisions on se reportera à ces documents sachant que l'onduleur est un convertisseur électronique de courant.

Bien entendu, l'agencement peut faire appel à une machine électrique tournante telle qu'un alternateur simple relié électriquement à une batterie.

Dans un mode de réalisation cet alternateur est associé à un démarreur monté en parallèle avec l'alternateur entre une première borne reliée à la masse et une deuxième borne relié à un circuit permettant dans un mode de réalisation de mettre en série deux batteries, par exemple de 12V, pour alimenter le démarreur en 24V au démarrage et de mettre en parallèle ces deux batteries après le démarrage du véhicule automobile.

Le dispositif 10 comporte donc au moins un convertisseur électronique 18, 22 et une unité 20 de stockage d'énergie électrique. Ce dispositif comporte deux réseaux électriques, l'un dédié à la puissance (les unités de stockage 20 étant en série) et adapté à la récupération d'énergie, l'autre dédié à l'énergie pour notamment recharger la batterie 16 connectée au réseau de bord du véhicule et/ou alimenter ce réseau de bord.

Dans un premier mode de réalisation non limitatif, le dispositif 10 comporte un convertisseur continu-continu 22 de tension.

Dans un deuxième mode de réalisation non limitatif, le dispositif 10 comporte un onduleur 18. L'onduleur est un convertisseur réversible DC/AC. Il fonctionne en convertisseur AC/DC lorsque la machine est en mode générateur électrique (il est souvent appelé pont redresseur), et en convertisseur DC/AC lorsque la machine est en mode moteur électrique.

Dans un troisième mode de réalisation non limitatif, le dispositif 10 comporte un onduleur 18 et un convertisseur continu-continu 22.

Dans un quatrième mode de réalisation, dans l'exemple de réalisation non limitatif qui a été représenté à la figure 1, le dispositif 10 comporte trois convertisseurs électroniques, à savoir un onduleur 18, un convertisseur continu-continu 22, et en plus un interrupteur bi-position 30 ou deux interrupteurs 30, qui sont reliés entre eux par des connectiques de puissance tels que des bus barres (non représentés).

L'onduleur 18, de manière précitée, est un convertisseur électrique réversible de courant alternatif-continu dit "AC/DC" en mode générateur électrique ou continu alternatif dit "DC/AC" en mode moteur électrique.

Le convertisseur continu-continu 22 permet notamment de convertir une tension côté unité de stockage d'énergie 20, ladite tension se situant dans une plage de valeurs, ici de manière non limitative entre 6V et 35V, en une tension compatible avec celle de la batterie 16, la batterie alimentant un réseau de bord par exemple de l'ordre de 12 volts.

L'interrupteur bi-position 30 (ou les interrupteurs 30) permet quant à lui de déterminer le mode de fonctionnement de la machine électrique 12.

Dans l'exemple pris, le mode générateur comprend deux phases : une phase dite alternateur, et une phase dite récupératrice d'énergie, le mode moteur comprend une phase de démarrage et éventuellement d'assistance dynamique.

Le mode de fonctionnement de la machine avec un interrupteur bi-position est le suivant :
- l'interrupteur relie l'onduleur 18 et l'unité de stockage 20 dans le mode moteur, et dans la phase récupératrice d'énergie,
- l'interrupteur relie l'onduleur 18 et la batterie 16 dans la phase alternateur.

On notera que dans un autre mode de réalisation, il n'existe pas d'interrupteur.

Le dispositif 10 est à cet effet relié par des câbles 24 à la machine électrique, par des câbles 26 à la batterie, et par des câbles 28 à un réseau d'alimentation électrique du véhicule.

Le dispositif 10 permettant de récupérer l'énergie cinétique du véhicule à l'aide de la machine électrique, cette architecture est plus particulièrement connue sous le nom d'architecture "14+X".

Comme l'illustrent les figures 1 et 2, le dispositif 10 comporte un boîtier unique 32 dans lequel sont agencés le(s) convertisseur(s) électronique(s) 18, 22 et le(s) unité(s) 20 de stockage d'énergie électrique notamment pour réduire les longueurs des connectiques entre ces éléments, de manière à limiter les effets des inductances de liaison.

Pour plus de précision on se reportera par exemple au document FR 2 883 670, notamment à la figure 5 de celui-ci montrant en perspective le boîtier unique 32 comportant une bac inférieure, recevant le ou les unités de stockage d'énergie, et une partie supérieure, formant couvercle pour le bac inférieur et recevant le ou les convertisseurs électroniques. En variante le ou les convertisseurs électroniques sont déportés en sorte que la partie supérieure peut être simplifiée. Cette partie supérieure peut, dans un mode de réalisation consister en une plaque à ailettes comme visible à la figure 5 de la demande FR 2 883 670

Dans l'exemple de réalisation de la figure 2 plusieurs unités élémentaires de stockage d'énergie 20 sont agencées dans le boîtier 32, plus précisément dans le bac inférieur du boîtier.
Ici le bac inférieur comporte des pattes trouées 132 au niveau de son fond pour sa fixation à une partie fixe du véhicule, telle qu'une partie froide de la carrosserie du véhicule.
Ici on n'a pas représenté la partie supérieure du boîtier 32 pour pouvoir voir les unités 20. Cette partie supérieure formant couvercle a une forme complémentaire au bord supérieur du bac inférieure.
Ces unités 20 sont ici de section circulaire, en variante de section autre que circulaire, par exemple de section polygonale ou ovale.
Dans le mode de réalisation de la figure 2 il est prévu 12 unités 20. Ce nombre dépend bien entendu des applications. Les unités 20 sont ici des Ultra capacités ou « supercondensateurs ».
Bien entendu certaines au moins de ces unités 20 sont en variante des batteries ayant la même forme et la même taille que les Ultra capacités.
L'enveloppe ou boîtier des unités 20 est avantageusement thermiquement conducteur. Cette enveloppe est avantageusement métallique.
Le bac inférieure est également avantageusement thermiquement conducteur. Il est par exemple métallique.
Si besoin ce bac peut être ceinturé latéralement par une couche thermiquement isolante lorsque le bac inférieur est proche d'une source chaude. En variante ce bac est en matière thermiquement isolant, par exemple en matière plastique. Tout dépend des applications et notamment de l'implantation du bac à proximité d'une source froide ou d'une source chaude.

Le dispositif d'alimentation 10 comporte selon une caractéristique des moyens de refroidissement des unités de stockage 20 par convection.

Pour cela, un flux d'air traverse le boîtier 32, et circule autour des unités de stockage 20, pour les refroidir.

Ainsi ces moyens produisent un flux d'air de refroidissement circulant dans le boîtier 32, et donc dans le bac inférieur, de manière à balayer successivement au moins deux unités de stockage 20.

A cet effet le boîtier 32 forme un conduit de canalisation du flux d'air d'orientation principale longitudinale, qui comporte une portion amont 34 par laquelle le flux d'air pénètre dans le boîtier 32, une portion intermédiaire 36 dans laquelle les unités de stockage 20 sont agencées, et une portion aval 38 de sortie du flux d'air hors du dispositif d'alimentation.

Le flux d'air circule ainsi longitudinalement selon l'axe longitudinal A au travers du boîtier 32 d'amont en aval, c'est-à-dire de gauche à droite en se référant à la figure 2.

Pour refroidir les unités de stockage 20, le flux d'air prélève une certaine quantité de chaleur depuis chaque unité de stockage. Ainsi, le flux d'air se réchauffe progressivement au fur et à mesure de son parcours dans le boîtier 32, c'est-à-dire que sa température augmente de l'amont vers l'aval.

La quantité de chaleur que le flux d'air est apte à prélever d'une unité de stockage 20 dépend de la différence de températures entre le flux d'air et l'unité de stockage 20.

Ainsi, puisque la température du flux d'air augmente de l'amont vers l'aval, le flux d'air prélève une plus faible quantité de chaleur depuis les unités de stockage 20 situées en aval.

Pour compenser cette baisse de quantité d'air prélevée par le flux d'air, le boîtier 32 est réalisé de manière que la vitesse du flux d'air augmente au fur et à mesure de son écoulement dans le boîtier 32.

Le boîtier 32 comporte des moyens pour augmenter progressivement le flux d'air lors de sa circulation dans le boîtier 32, et donc dans le bac inférieur, d'amont en aval.

Le boîtier 32 est configuré au niveau des unités de stockage d'énergie pour présenter une section de canalisation décroissante d'amont en aval selon le sens d'écoulement du flux d'air.
Les bords longitudinaux du boîtier 32 s'étendant transversalement (perpendiculairement) par rapport au plan de la figure 2, se rapprochent ainsi l'un de l'autre d'amont en aval.

Ainsi, dans un mode de réalisation, pour augmenter progressivement de manière simple la vitesse du flux d'air dans le boîtier 32, la portion intermédiaire 36 du boîtier 32 est en forme d'un tronçon de conduit convergent.

La section de la portion intermédiaire convergente 36 est décroissante de manière continue d'amont en aval, par contre, le débit du flux d'air est constant tout au long de son cheminement au travers du boîtier. Cela a pour effet d'augmenter la vitesse d'écoulement du flux d'air, de manière progressive de l'amont vers l'aval.

Ici, les unités de stockage 20 sont agencées dans la portion intermédiaire 36 du boîtier en formant plusieurs alignements longitudinaux, ou rangées longitudinales, qui sont parallèles et répartis transversalement, comme on peut le voir à la figure 2 (c'est-à-dire perpendiculairement au plan de la figure 2).

En variante les unités sont alignées longitudinalement en étant répartis longitudinalement comme dans la demande FR 2 883 670 ; un espace existant entre les unités alignées.

Bien entendu toutes les combinaisons sont possibles. Par exemple une rangée longitudinale est composée d'unités réparties transversalement et l'autre rangée d'unités réparties longitudinalement.

Les unités 20 sont ici réparties par paires en contact l'une avec l'autre. Les paires adjacentes sont éloignées les unes des autres. Des espaces existent ainsi entre les paires. Ici il est prévu trois rangées longitudinales de deux paires d'unité 20 et donc deux passages longitudinaux, ici de taille constante, entre les rangées.

Des autres passages, ici convergents, existent entre les rangées extrêmes et les bords de la portion 36. Ces passages sont de taille progressivement décroissante.

La dimension transversale de la portion amont 34 et de la portion avale 38 est selon une caractéristique inférieure à l'encombrement transversal général de l'ensemble formé par les alignements d'unités de stockage 20. Par conséquent la dimension transversale de la portion amont 34 et de la portion avale 38 est inférieure à la dimension transversale de chaque section transversale de la portion intermédiaire 36.

Cette disposition permet de simplifier les portions amont 34 et aval 38 et de monter aisément un ventilateur dans au moins l'une des portions 34, 38.

Ainsi dans le mode de réalisation de la figure 1, les portions amont 34 et avale 38 sont en forme de conduit de section circulaire. En variante la section de ces conduits 34, 38 est non circulaire, par exemple carrée, ou rectangulaire ou ovale.

Pour permettre une très bonne répartition du flux d'air dans le volume intérieur du boîtier, en vue d'obtenir une meilleure circulation d'air, même à proximité des parois de la portion intermédiaire 36 qui sont éloignées transversalement d'un axe principal A longitudinal du boîtier 32, le boîtier 32 comporte selon une caractéristique de l'invention un tronçon de raccordement divergent 40, formant un conduit, qui relie la portion amont 34 à l'extrémité amont 36a de la portion intermédiaire convergente 36, et un tronçon de raccordement convergent 42, formant un conduit, qui relie l'extrémité aval 36b de la portion intermédiaire 36 à la portion avale 38.

La section de l'extrémité amont 36a de la portion 36 est donc supérieure à celle de la portion amont 34, tandis que la section de l'extrémité avale 36b de la portion 36 est inférieure à celle de l'extrémité amont 36a et supérieure à la section de la portion avale 38.

Les sections des portions 34, 38 sont ici globalement égales.

La portion 34 et le tronçon 40 forment globalement un premier entonnoir, tandis que la portion 38 et le tronçon 42 forment globalement un second entonnoir. Le premier entonnoir et le second entonnoir sont montés tête bêche.

Les entonnoirs permettent une bonne répartition et une bonne aspiration du flux d'air.

Le second entonnoir permet une accélération du flux d'air et un meilleur refroidissement des unités de stockage d'énergie situées le plus en aval dans le sens d'écoulement du flux d'air. Le premier entonnoir permet d'envoyer de l'air sur toutes les unités de stockage en regard de l'entonnoir.

Le boîtier 32 forme donc de manière précitée un conduit de canalisation du flux d'air d'orientation principale longitudinale, dans lequel les unités de stockage sont agencées.

De plus, le boîtier 32 comporte des moyens pour diviser le flux d'air en plusieurs flux secondaires pour homogénéisé encore plus la température des unités 20, notamment des unités centrales agencées au niveau de l'axe A. Chacun de ces flux secondaire est associé à un alignement d'unités de stockage 20, pour refroidir principalement les unités de stockage 20 de l'alignement qui est associé au flux d'air secondaire.

Les moyens pour diviser le flux d'air en plusieurs flux secondaires comportent des déflecteurs aérodynamiques, ici des ailettes 44, qui sont orientés de manière à éloigner les flux d'air secondaires de l'axe principal A du boîtier 32.

Ici, les unités de stockage 20 sont réparties en trois alignements longitudinaux, ici un alignement central situé sur l'axe principal longitudinal A du boîtier 32 et deux alignements agencés transversalement de part et d'autre de l'alignement central. Les espaces entre les alignements longitudinaux peuvent être ainsi constants.

Le boîtier comporte alors deux ailettes 44 agencées symétriquement par rapport à l'axe principal longitudinal.

Il sera compris que l'invention n'est pas limitée à ce mode de réalisation, et que les unités de stockage 20 peuvent être agencées dans la portion intermédiaire 36 en formant un nombre différent d'alignements. Le boîtier comporte alors un nombre d'ailettes 44 adapté au nombre d'alignement.

Le flux d'air traversant le boîtier est dans un mode de réalisation un flux d'air provoqué par le roulage du véhicule automobile.

Par exemple on prévoit un déflecteur à l'avant du véhicule relié par une canalisation, dite boa, à la portion amont 34 formant un embout de raccordement au boa.

En variante le flux d'air traversant le boîtier 32 est un flux d'air pulsé, c'est-à-dire qu'il est produit artificiellement.

Pour cela, le dispositif d'alimentation 10 comporte au moins un ventilateur 46 de production du flux d'air qui est agencé dans la portion amont 34, formant un conduit, et/ou un ventilateur agencé dans la portion avale, formant un conduit, 38 du boîtier 32.

Dans la figure 2, un ventilateur unique est agencé dans la portion amont 34 du boîtier 32.

On appréciera que le ventilateur peut avoir radialement une faible taille du fait des la présence des tronçons 40, 42.

Il sera compris que l'invention n'est pas limitée à ce mode de réalisation, et que le dispositif d'alimentation peut comporter un autre ventilateur agencé dans la portion avale 38 du boîtier 32.

Le ventilateur 46 pousse l'air sur les unités 20, tandis que le ventilateur agencé dans la portion avale 38 extrait l'air réchauffé par les unités 20. Ce ventilateur peut être unique lorsque le flux d'air rentrant dans la portion amont est provoqué par le roulage du véhicule.

La portion amont 34 est dans un mode de réalisation reliée par exemple par une canalisation, à une source froide. Cette source froide peut être une canalisation de l'installation de climatisation du véhicule. En variante, de manière précitée, on prévoit un déflecteur à l'avant du véhicule relié par une canalisation à la portion 34.

Le ou les ventilateurs sont dans un mode de réalisation alimentés électriquement par les unités 20, plus précisément par les Ultra capacités.

En variante le ou les ventilateurs sont alimentés électriquement par une batterie d'un réseau de bord du véhicule.

En variante le ou les ventilateurs sont alimentés électriquement par des batteries rechargeables placées dans le boîtier 32 ainsi que les Ultra capacités.

En variante les ventilateurs sont alimentés par le convertisseur DC/DC précité.

Selon un autre aspect du dispositif d'alimentation, le dispositif d'alimentation comporte des moyens de commande du ventilateur 46, pour que le flux d'air soit produit lorsque les unités de stockage 20 ont besoin d'être refroidies. Ces moyens de commande, dans un mode de réalisation, font varier la vitesse du ventilateur en fonction des besoins de refroidissement.

Ces moyens dans un mode de réalisation pilotent de manière différée les ventilateurs des portions 34, 38. En variante on fait varier de manière différente la vitesse des ventilateurs.

De plus, les moyens de commande et le ou les ventilateurs sont réalisés pour permettre un ajustement du débit du flux d'air en fonction de la température des unités de stockage.

Un dispositif électronique pilote dans un mode de réalisation la mise en route et l'arrêt du ou des ventilateurs et éventuellement la vitesse de rotation du ou des ventilateurs,

Ce dispositif électronique reçoit une information sur la température des unités 20, par exemple par l'intermédiaire d'un capteur de température placé dans le boîtier 32, qui dans un mode de réalisation est étanche.

Le dispositif électronique est dans un mode de réalisation placé dans le boîtier 32, par exemple dans le couvercle de celui-ci. En variante ce dispositif est déporté par rapport au boîtier 32.

Dans un mode de réalisation on utilise un thermocouple pour piloter le ou les ventilateurs.

La portion avale 38 peut avoir une section et/ou une forme différente de la portion amont 34.

Cette portion avale est dans une mode de réalisation raccordée à une canalisation pour évacuer l'air chaud vers une région, par exemple vers l'extérieur, ou l'air chaud ne risque pas de réchauffer un dispositif ou un système du véhicule.

Le ou les composants 18,30, 22 précités sont dans un mode de réalisation déportés par rapport aux unités 20.

Ainsi qu'il ressort de la description et des dessins, le bac inférieur du boîtier présente au niveau des unités 20 des sections décroissantes.

La section S1 du boîtier 32 au niveau des trois premières unités 20, alignées selon un axe perpendiculaire à l'axe longitudinal A, est supérieure à la section S2 du boîtier 32 au niveau des trois dernières unités 20 alignés selon un axe perpendiculaire à l'axe A..

Les faces frontales de deux des trois premières unités 20, sont en regard du tronçon 40, tandis que les faces dorsales de deux des trois dernières unités 20 sont en regard du tronçon 42.

Les autres unités 20 sont en regard respectivement de la portion amont 34 et de la portion avale 38.

Bien entendu il peut être prévu en variante plus de trois premières et deuxièmes unités 20.

Des zones arrondies relient les portions 34, 36, 38 aux tronçons 40, 42 comme visible à la figure 2. Ces zones facilitent la circulation de l'air.

La partie supérieure du boîtier est dans un mode de réalisation complémentaire de celle du bac inférieure. En variante cette partie supérieure recouvre le bac inférieure en étant de forme quelconque.

On notera que les pattes de fixation 132 sont associées aux tronçon 40, 42 créant chacun un dégagement facilitant la fixation.

## Revendications

1. Dispositif d'alimentation électrique pour un véhicule automobile, qui est destiné à relier au moins une machine électrique à au moins une batterie du véhicule, et qui comporte un boîtier unique (32) dans lequel plusieurs unités de stockage d'énergie électrique (20) sont agencées, des moyens de refroidissement des unités de stockage par convexion, qui produisent un flux d'air de refroidissement circulant dans le boîtier de manière à balayer successivement au moins deux unités de stockage (20), dans lequel le boîtier comporte, d'amont en aval :
- une portion amont (34) par lequel le flux d'air pénètre dans le boîtier ;
- une portion intermédiaire convergente (36) dans laquelle les unités de stockage sont agencées ;
- une portion avale (38) par laquelle le flux d'air sort du boîtier ;
**caractérisé en ce que** la section de l'extrémité amont (36a) de la portion intermédiaire convergente (36) est supérieure à la section de la portion amont (34), **en ce que** le boîtier comporte un tronçon de raccordement divergent (40) reliant la portion amont (34) à la potion intermédiaire convergente (36), **en ce que** la section de l'extrémité aval (36b) de la portion intermédiaire convergente (36) est supérieure à la section de la portion avale (38) et **en ce que** le boîtier comporte un tronçon de raccordement convergent (42) reliant la portion intermédiaire convergente à la portion avale (38).

2. dispositif selon la revendication 1, **caractérisé en ce que** des zones arrondies relient d'une part, le tronçon de raccordement divergent (40) à la portion amont (34) et à la portion intermédiaire (36) et d'autre part, le tronçon de raccordement convergent (42) à la portion avale (38) et à la portion intermédiaire (36).

3. Dispositif selon la revendication 1 ou 2, **caractérisé en ce que** le boîtier (32) forme un conduit de canalisation du flux d'air d'orientation principale longitudinale, dans lequel les unités de stockage sont agencées.

4. Dispositif selon l'une quelconque des revendications précédentes, **caractérisé en ce que** les unités de stockage (20) sont agencées dans le boîtier (32) de manière à former plusieurs alignements longitudinaux sensiblement parallèles, qui sont répartis transversalement et/ou longitudinalement dans le boîtier, et **en ce que** le boîtier comporte des moyens (44) pour diviser de flux d'air en plusieurs flux secondaires globalement parallèles, dont chaque flux d'air secondaire circule autour des unités de stockage d'un alignement d'unités de stockage associé.

5. Dispositif selon la revendication précédente, **caractérisé en ce que** les dits moyens pour diviser le flux consistent en au moins une ailette (44) agencée dans une portion du boîtier située en amont des unités de stockage, par rapport au sens d'écoulement du flux d'air.

6. Dispositif selon la revendication 4 ou 5, **caractérisé en ce que** les faces de deux d'au moins trois premières unités (20), alignées selon une direction perpendiculaire à l'axe longitudinal (A) du boîtier (32), sont en regard du tronçon de raccordement divergent (40), tandis que les faces de deux d'au moins trois dernières unités (20), alignées selon une direction perpendiculaire à l'axe longitudinal (A) du boîtier (32), sont en regard du tronçon de raccordement convergent (42).

7. Dispositif selon l'une quelconque des revendications précédentes, **caractérisé en ce que** il comporte au moins un ventilateur (46) permettant de produire le flux d'air et qui est agencé dans le tronçon amont et/ou dans le tronçon aval du boîtier.

8. Dispositif selon la revendication 7, **caractérisé en ce qu'**il comporte un dispositif électronique pour piloter le ventilateur.

9. Dispositif selon la revendication 8, **caractérisé en ce que** le ventilateur est alimenté électriquement par les unités de stockage d'énergie.

10. Dispositif selon l'une quelconque des revendications précédentes, **caractérisé en ce que** les unités de stockage d'énergie consistent en des Ultra capacités.

## Claims

1. Electrical supply device for a motor vehicle, which is designed to connect at least one electrical machine to at least one battery of the vehicle, and which comprises a single case (32) in which a plurality of electrical energy storage units (20) are arranged, means for cooling storage units by convection, which produce a flow of cooling air which circulates in the case, such as to sweep in succession at least two storage units (20), wherein the case comprises, going from upstream to downstream:
- an upstream portion (34) by means of which the flow of air penetrates into the case;
- a converging intermediate portion (36) in which the storage units are arranged;
- a downstream portion (38) by means of which the flow of air is discharged from the case;
**characterised in that** the cross-section of the upstream end (36a) of the converging intermediate portion (36) is larger than the cross-section of the upstream portion (34), **in that** the case comprises a diverging connection section (40) which connects the upstream portion (34) to the converging intermediate portion (36), **in that** the cross-section of the downstream end (36b) of the converging intermediate portion (36) is larger than the cross-section of the downstream portion (38), and **in that** the case comprises a converging connection section (42) which connects the converging intermediate portion to the downstream portion (38).

2. Device according to claim 1, **characterised in that** rounded areas connect firstly the diverging connection section (40) to the upstream portion (34) and to the intermediate portion (36), and secondly the converging connection section (42) to the downstream portion (38) and to the intermediate portion (36).

3. Device according to claim 1 or 2, **characterised in that** the case (32) forms a duct for channelling the flow of air with a longitudinal main orientation, in which the storage units are arranged.

4. Device according to any one of the preceding claims, **characterised in that** the storage units (20) are arranged in the case (32) such as to form a plurality of substantially parallel longitudinal alignments, which are distributed transversely and/or longitudinally in the case, and **in that** the case comprises means (44) for dividing the flow of air into a plurality of globally parallel secondary flows, wherein each secondary flow of air circulates around storage units of an alignment of associated storage units.

5. Device according to the preceding claim, **characterised in that** the said means for dividing the flow consist of at least one fin (44) which is arranged in a portion of the case situated upstream from the storage units, relative to the direction of flow of the flow of air.

6. Device according to claim 4 or 5, **characterised in that** the surfaces of two out of at least three first units (20), which are aligned according to a direction perpendicular to the longitudinal axis (A) of the case (32), are opposite the diverging connection section (40), whereas the surfaces of two out of at least three last units (20), which are aligned according to a direction which is perpendicular to the longitudinal axis (A) of the case (32), are opposite the converging connection section (42).

7. Device according to any one of the preceding claims, **characterised in that** it comprises at least one fan (46) which makes it possible to produce the flow of air, and which is arranged in the upstream section and/or in the downstream section of the case.

8. Device according to claim 7, **characterised in that** it comprises an electronic device to control the fan.

9. Device according to claim 8, **characterised in that** the fan is supplied electrically by the energy storage units.

10. Device according to any one of the preceding claims, **characterised in that** the energy storage units consist of ultra-capacitors.

## Patentansprüche

1. Vorrichtung: zur Stromversorgung für an Kraftfahrzeug, die dafür bestimmt ist, mindestens eine elektrische Maschine mit mindestens einer Sattene des Fahrzeugs zu verbinden, und die ein Gehäuse (32), in dem mehrere Einheiten zum Speichern elektrischer Energie (20) angeordnet sind, und Mittel zum konvektiven Kühlen der Speichereinheiten umfasst, die einen Kühlluftstrom erzeugen, der das Gehäuse so durchströmt, dass er nacheinander mindestens zwei Speichereinheiten (20) bestreicht, wobei das Gehäuse von vorne nach hinten
- einen oberstromigen Teil (34), durch den der Luftstrom in das Gehäuse eintritt,
- einen zusamrnerdaufenden mittleren Teil (36), in dem die Speichereinheiten angeordnet sind.
- einen unterstromigen Teil (38), durch den der Luftstrom aus dem Gehäuse austritt,
umfasst, **dadurch gekennzeichnet, dass** der Querschnitt des oberstromigen Endes (36a) des zusammenkaufenden mittleren Teils (36) größer ist als der Querschnitt des oberstromigen Teils (34), **dass** das Gehäuse einen ausehiandedaufenden Verbindungsabschnitt (40) umfasst, der den oberstromigen Teil (34) mit dem zusammenlaufenden mittleren Teil (36) verbindet, **dass** der Querschnitt des unterstromigen Teils (36b) des zusammenrufenden mittleren Teils (36) größer ist als der Querschnitt des unterstromigen Teils (38), und **dass** das Gehäuse einen zusammenlaufenden Verbindungssbschrntt (42) umfasst, der den zusammenlaufenden mittleren Teil mit dem unterstromigen Teil (38) verbindet.

2. Vorrichtung nach Anspruch 1, **dadurch gekennzeichnet, dass** abgerundete Bereiche einerseits den auseinaneerjaufenden Verbindungsabschnitt (48) mit dem oberstromigen Teil (34) und mit dem mittleren Teil (36) und andererseits den zusammenlaufenden Verbindungsabschnitt (42) mit dem unterstromigen Teil (38) und dem mittleren Teil (36) verbinden.

3. Vorrichtung nach Anspruch 1 oder 2, **dadurch gekennzeichnet, dass** das Gehäuse (32) eine Röhre zum Kanalisieren des Luftstroms hauptsächlich in Längsrichtung bildet, in der die Speichereinheiten angeordnet sind.

4. Vorrichtung nach einem der vorhergehenden Ansprüche, **dadurch gekennzeichnet, dass** die Speichereinheiten (20) so in dem Gehäuse (32) angeordnet sind, dass sie mehrere Langsanordnungen bilden, die in etwa parallel sind und die quer und/oder längs in dem Gehäuse verteilt sind, und **dass** das Gehäuse Mittel (44) umfasst, um den Luftstrom in mehrere Nebenströme zu unterteilen, die insgesamt parallel sind, wobei jeder Nebenluftstrom die Speichereinheiten einer zugeordneten Anordnung von Speichereinheiten umströmt

5. Vorrichtung nach dem vorhergehenden Anspruch, **dadurch gekennzeichnet, dass** die besagten Mittel zum Unterteilen des Luftstroms mindestens einen Flügel (44) umfassen, der in einem Teil des Gehäuses angeordnet ist der in Flussrichtung des Luftstroms vor den Speiehereinheiten liegt.

6. Vorrichtung nach Anspruch 4 oder 5, **dadurch gekennzeichnet, dass** die Seiten von zwei von mindestens drei ersten Einheiten (20), die in einer zur Längsachse (A) des Gehäuses (32) senkrechten Richtung angeordnet sind, dem auseinanderlaufenden Verbindungsabschnitt (40) gegenüber liegen, während die Seiten von zwei von mindestens drei letzten Einheiten (20), die in einer zur Langsachse (A) des Gehäuses (32) senkrechten Richtung angeordnet sind, dem zusammenlaufenden Verbindungsabschnitt (42) gegenüber liegen.

7. Vorrichtung nach einem der vorhergehenden Ansprüche, **dadurch gekennzeichnet, dass** sie mindestens einen Lüfter (46) umfasst, der das Erzeugen des Luftstroms erlaubt, und der in dem oberstromigen Abschnitt und/oder in dem unterstromigen Abschnitt des Gehäuses angeordnet ist.

8. Vorrichtung nach Anspruch 7, **dadurch gekennzeichnet, dass** sie eine elektronische Vorrichtung zum Steuern des Lüfters umfasst.

9. Vorrichtung nach Anspruch 8, **dadurch gekennzeichnet, dass** der Lüfter durch die Einheiten zum Speichern der Energie mit Strom versorgt wind.

10. Vorrichtung nach einem der vorhergehenden Ansprüche, **dadurch gekennzeichnet, dass** die Einheiten zum Speichern der Energie aus Ultracaps bestehen.
